# EUROPEAN PATENT APPLICATION

(11) **EP 1 958 747 A2**
(43) Date of publication of application: **20.08.2008**
(21) Application number: 08001049.9
(22) Date of filing: 21.01.2008
(51) Int. Cl.: B29B 15/10

(54) **Resin impregnating apparatus**

(30) Priority: 15.02.2007 JP 2007034221
(71) Applicant: Murata Machinery, Ltd., Kyoto 601 (JP)
(72) Inventor: Uozumi, Tadashi c/o Murata Machinery Ltd.,, Kyoto-shi Kyoto (JP); Takashima, Hiroki c/o Murata Machinery Ltd.,, Kyoto-shi Kyoto (JP); Tanigawa, Motohiro c/o Murata Machinery Ltd.,, Kyoto-shi Kyoto (JP)
(74) Representative: Liedl, Christine

(57) **Abstract**

The present invention provides a resin impregnating apparatus which enables a fiber feeding speed to the increased without increasing the size, complexity or costs of the apparatus. A resin impregnating apparatus 1 impregnating fibers F with resin includes a block member 2 including a tapered passage 21 through which the fibers F pass and which is tapered toward a direction in which the fibers F pass, and a resin supply device 3 supplying the resin to the fibers F in the vicinity of an inlet of the tapered passage 21. As the fibers F pass through the tapered passage 21 carrying the supplied resin, the resin is pressurized by a wedge effect of the tapered passage 21 so that the fibers F are impregnated with the resin (Fig. 1).

## Description

### Field of the Invention

The present invention relates to a resin impregnating apparatus that impregnates fibers with resin in filament winding formation.

### Background of the Invention

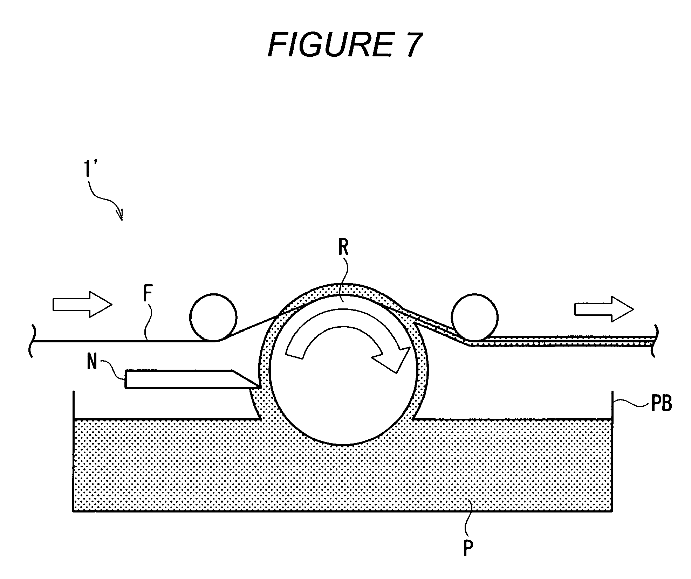

Conventional resin impregnating apparatuses for filament winding formation (hereinafter referred to as FW formation) are configured as shown in Figure 7. That is, a conventional resin impregnating apparatus 1' is mainly composed of a resin vessel PB in which a resin P is stored, a rotating roller R the lower portion of which is immersed in the resin P, and a knife edge N that adjusts the amount of the resin P adhering to a surface of the rotating roller R. The rotating roller R is rotated at a speed corresponding to a speed at which fibers F are fed, to impregnate the fibers F fed in contact with the upper portion of the rotating roller R, with the resin P adhering to the surface of the rotating roller R.

For the FW formation, a possible approach to improving productivity is to increase the fiber feeding speed. However, with the conventional resin impregnating apparatus, an increase in the fiber feeding speed prevents a sufficient amount of resin from adhering to the surface of the rotating roller. This in turn precludes the fibers from being sufficiently impregnated with the resin. The increase in fiber feeding speed thus has a limitation.

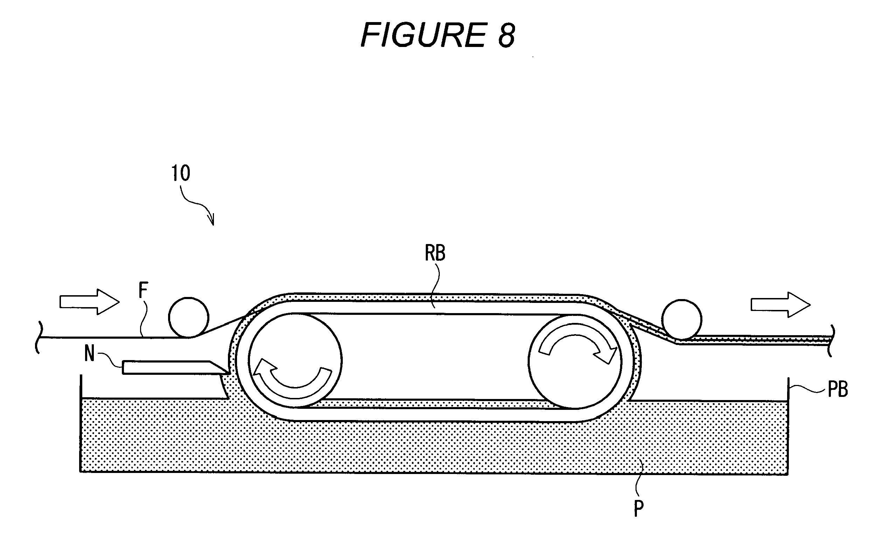

Thus, as shown in Figure 8, instead of the rotating roller R, a rotating belt RB extending in a fiber F feeding direction may be provided to keep the fibers F in contact with the rotating belt RB over a longer distance. This allows an increase in fiber feeding speed while appropriately maintaining the amount of resin infiltrating the fibers.

A method has also been proposed in which fibers are passed through a tightly closed space so that the fibers passing through the space are supplied with resin under a high pressure by a resin supply device such as a pump, thus forcibly impregnating the fibers with the resin (for example, Published Japanese translation of PCT international publication for patent application (Toku-hyo) No.2002-533241).

However, with the method of using the rotating belt to maintain the appropriate resin impregnation amount, for example, to double the feeding speed, the contact length over which the fibers remain in contact with the rotating belt needs to be about doubled. This disadvantageously increases the size of the resin impregnating apparatus.

Moreover, with the method of impregnating the fibers with the resin under the high pressure, the tightly closed space needs to be provided in order to exert the high pressure. The method also requires the resin supply device exerting the high pressure. Thus, disadvantageously, the resultant resin impregnating apparatus is complicated and requires high costs.

The present invention is composed in view of these circumstances. An object of the present invention is to provide a resin impregnating apparatus which enables the fiber feeding speed to be increased to improve the productivity of FM formation, without increasing the size, complicatedness, or costs of the apparatus.

### Summary of the Invention

To accomplish this object, the present invention provides (1) a resin impregnating apparatus impregnating fibers with resin in filament winding formation, the apparatus being characterized by comprising a block member comprising a tapered passage through which the fibers pass and which is tapered toward a direction in which the fibers pass, and a resin supply device supplying the resin to the fibers in the vicinity of an inlet of the tapered passage, and in that as the fibers pass through the tapered passage carrying the resin supplied by the resin supply device, the resin is pressurized by a wedge effect of the tapered passage so that the fibers are impregnated with the resin.

Furthermore, the present invention provides a resin impregnating apparatus configured as described above, characterized in that (2) the block member has an opening in at least a part of a periphery thereof, the opening being in communication with the tapered passage and extending from the inlet to an outlet of the tapered passage.

Furthermore, the present invention provides a resin impregnating apparatus configured as described in (2), characterized in that (3) the opening is open upward.

Furthermore, the present invention provides a resin impregnating apparatus configured as described in (2) or (3), characterized in that (4) the block member further comprises a lockable closing member lockably closing the opening so as to be able to freely open and close the opening.

According to the resin impregnating apparatus configured as described above, as the fibers pass through the tapered passage carrying the resin supplied by the resin supply device, the resin is pressurized by the wedge effect of the tapered passage. Thus, even when the fibers move at a high speed, the fibers can be sufficiently impregnated with the resin. The present invention thus allows the productivity of FW formation to be improved by increasing the fiber moving speed.

Furthermore, according to the present invention, sufficient resin impregnation can be achieved simply by providing the passage through which the fibers pass, with a tapered shape enabling the wedge effect to be exerted. Therefore, a simple and small-sized resin impregnating apparatus can be provided without the need for a high-pressure pump, a tightly closed passage, or the like.

Other features, elements, processes, steps, characteristics and advantages of the present invention will become more apparent from the following detailed description of preferred embodiments of the present invention with reference to the attached drawings.

### Brief Description of the Drawings

Figure 1 is a perspective view showing an example of a resin impregnating apparatus according to the present invention.
Figure 2 is a sectional view showing an essential part of the resin impregnating apparatus in Figure 1.
Figure 3 is a schematic diagram showing the configuration of a FW forming machine to which the resin impregnating apparatus in Figure 1 is applied.
Figure 4 is a sectional view showing an essential part of a resin impregnating apparatus according to a variation.
Figure 5 is a perspective view and a front view showing an essential part of a resin impregnating apparatus according to another variation.
Figure 6 is a perspective view showing an essential part of a resin impregnating apparatus according to yet another variation.
Figure 7 is a side view showing a resin impregnating apparatus according to a conventional example.
Figure 8 is a side view showing a resin impregnating apparatus according to a comparative example.

### Detailed Description of the Preferred Embodiments

A preferred embodiment of the present invention will be described below with reference to the drawings.

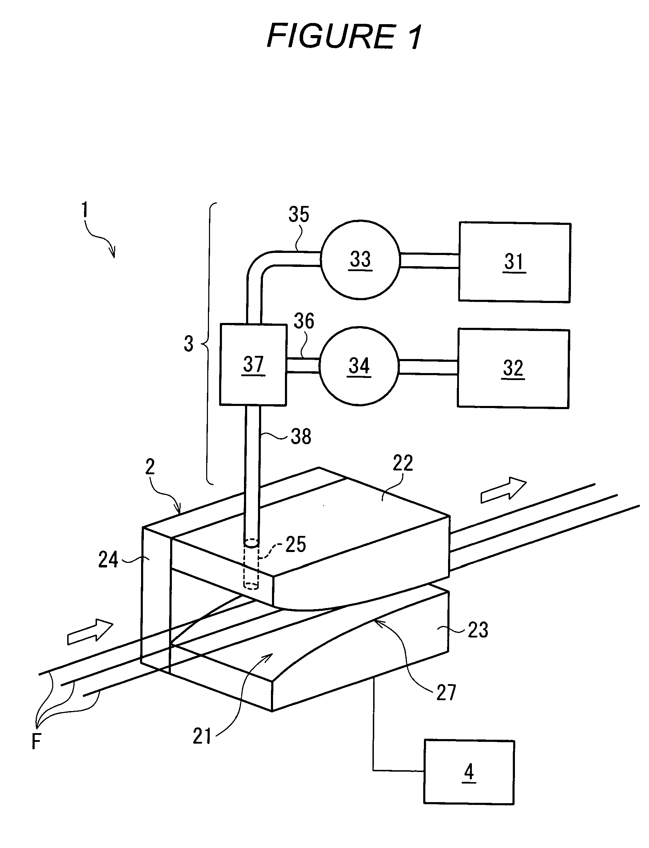

As shown in Figure 1, a resin impregnating apparatus 1 according to the present embodiment is mainly composed of a block member 2 comprising a passage 21 through which fibers F pass and a resin supply device 3 that supplies a resin to the vicinity of an inlet of the passage 21.

In the block member 2, the passage 21 is formed by an upper wall 22, a lower wall 23, and a sidewall 24 as shown in Figure 1. The upper wall 22 and the lower wall 23 are formed to project gradually toward the interior of the passage 21 as the passage 21 approaches an outlet thereof. That is, the passage 21 has a tapered shaped such that the passage 21 is tapered toward a direction in which the fibers F are fed. Furthermore, a resin supply hole 25 is formed in the upper wall 22 so that the resin is supplied to the vicinity of the inlet of the passage 21 through the resin supply hole 25.

The block member 2 has an opening 27 located opposite the sidewall 24 and which is in communication with the passage 21 and which extends from the inlet to outlet of the passage 21. To be arranged in the passage 21 for setup or the like, the fibers F can be easily inserted through the opening 27.

As shown in Figure 1, a temperature regulating unit 4 is connected to the block member 2 to regulate the temperature of the block member 2. This makes it possible to regulate the temperature of the resin supplied by the resin supply device 3 to adjust the viscosity of the resin. The temperature of the block member 2 is regulated between about 30°C and about 130°C depending on the resin used.

As shown in Figure 1, the resin supply device 3 is composed of a first vessel 31 in which a base resin is stored, a second vessel 32 in which a curing agent is stored, a first pump 33 and a first supply pipe 35 that supply the base resin to the block member 2, a second pump 34 and a second supply pipe 36 that supply the curing agent to the block member 2, a static mixer 37 that mixes the base resin and the curing agent fed through the first supply pipe 35 and the second supply pipe 36, respectively, to form a resin for FW formation, and a third supply pipe 38 through which the resin is supplied to the block member 2. The resin supply device 3 supplies the resin to the fibers F passing through the passage 21, through the resin supply hole 25 in the block member 2 to which the third supply pipe 38 is connected.

Here, the first pump 33 and the second pump 34 have only to deliver a sufficient amount of resin to allow the fibers F to pass through the passage 21 carrying the resin, and the fibers F need not be supplied under a high pressure. That is, the first pump 33 and the second 34 have only to exert a relatively low pressure.

The resin may be a resin normally used for FW formation. The preferred resin is, for example, an epoxy resin, a phenol resin, a polyimide resin, or a vinyl ester resin.

Furthermore, the fibers F may be fibers normally used for FW formation. For example, carbon fibers, glass fibers, aramid fibers, or ceramics may be appropriately used.

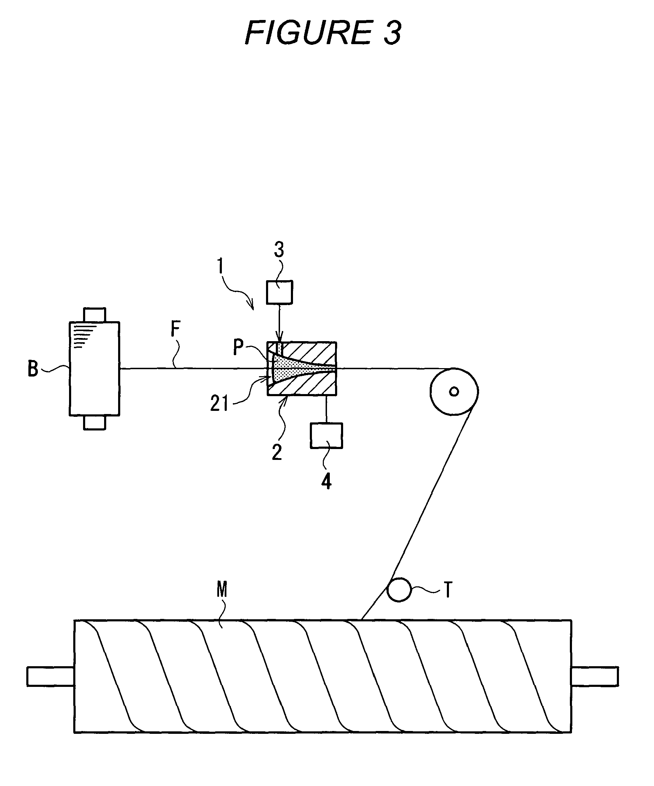

As shown in Figure 3, the resin impregnating apparatus 1 is located so that the fibers F unwound from a bobbin B pass through the passage 21 in the block member 2. The fibers F impregnated with the resin P from the resin supply device 3 are wound around a mandrel M while being traversed by a traverse device T.

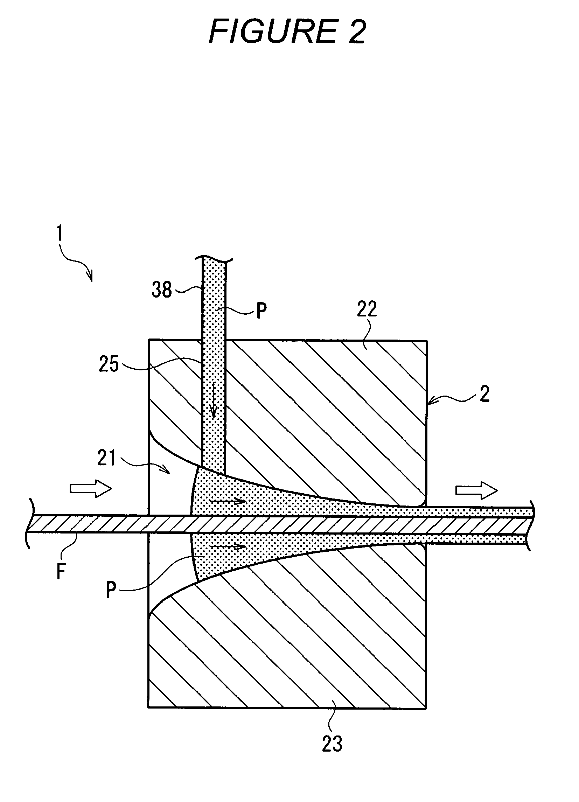

In the resin impregnating apparatus 1 configured as described above according to the present invention, the passage 21 in the block member 2 is tapered as shown in Figure 2. Thus, as the fibers F pass through the passage 21 carrying the resin P supplied by the resin supply device 3, the resin P is pressurized by the wedge effect of the passage 21. Thus, even when moving at a high speed, the fibers F passing though the resin impregnating apparatus 1 are sufficiently impregnated with the resin P.

Furthermore, with the resin impregnating apparatus according to the present invention, sufficient resin impregnation can be achieved simply by providing the passage with such a tapered shape as exerts the wedge effect. This eliminates the need for a high pressure pump or the like, providing a simple and small-sized resin impregnating apparatus. Furthermore, the small size of the resin impregnating apparatus increases the degree of freedom of arrangement of the resin impregnating apparatus.

That is, the present invention allows the productivity of FW formation to be improved without increasing the size, complicatedness, or costs of the apparatus.

The embodiment of the present invention has been described above in detail. However, the present invention is not limited to this.

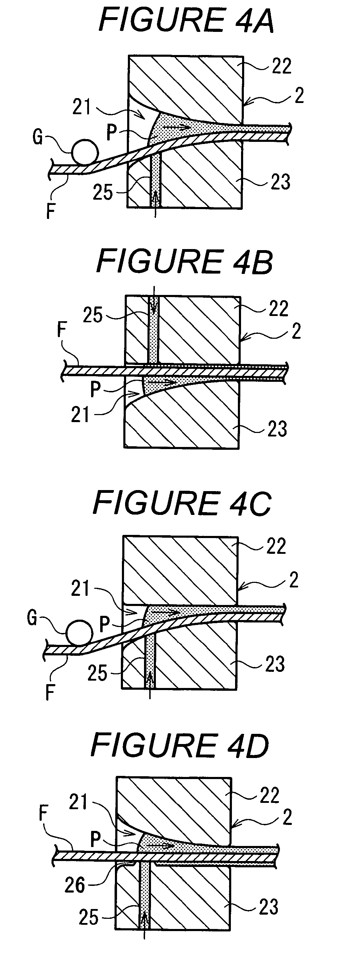

The position of the resin supply hole 25 in the block member 2 may be located in the lower portion of the block member 2 as shown in Figure 4A. In this case, the resin impregnating apparatus 1 is preferably configured so that to reliably supply the resin P to the fibers F, a guide roller G pushes down the fibers F in such a manner that the fibers F pass immediately close to the resin supply hole 25.

Furthermore, the passage 21 in the block member 2 may have any shape provided that the passage 21 can exert a wedge effect on the resin P carried on the fibers F. For example, as shown in Figures 4B and 4C, only one of the walls 22, 23, the wall 23, may be inclined, whereas the other wall 22 may be flat. Moreover, as shown in Figure 4D, the lower wall 23 may be flat and have a projecting portion 26 formed in a part thereof and at which the resin supply hole 25 is located. Compared to the configuration without the projecting portion 26, the configuration in Figure 4D can avoid the possible unstable supply of the resin P caused by the vertical swing of the fibers F.

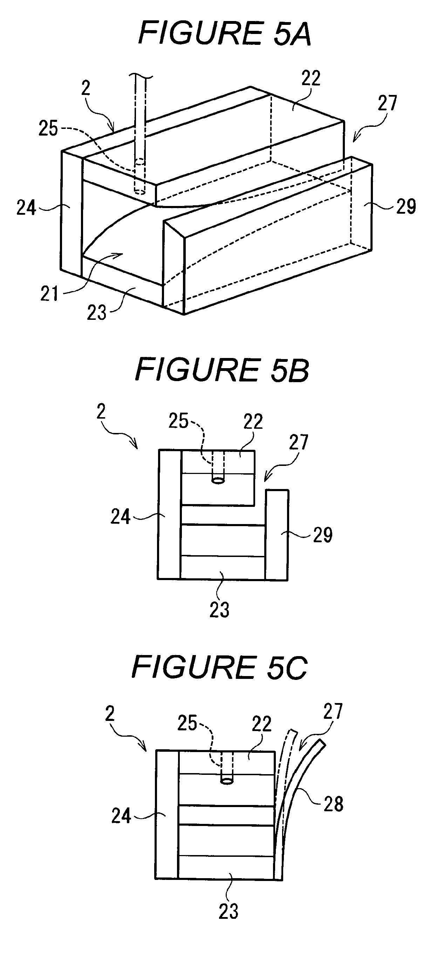

A screen 29 as shown in Figures 5A and 5B (showing the block member 2 in Figure 5A as viewed from the inlet of the passage 21) may be provided for the opening 27 in the block member 2. In this case, the opening 27 is open upward, making it possible to prevent the resin P from leaking laterally from the opening 27. Alternatively, as shown in Figure 5C (the block member 2 as viewed from the inlet of the passage 21), a lockable closing member 28, for example, a leaf spring, may be provided for the opening 27 to lockably close the opening 27 so as to be able to freely open and close the opening 27. In this case, the lockable closing member 28 is opened to allow the fibers F to be inserted into the block member 2. The lockable closing member 28 is closed to allow the fibers F to be impregnated with the resin P. This makes it possible to further reliably prevent the resin from leaking laterally.

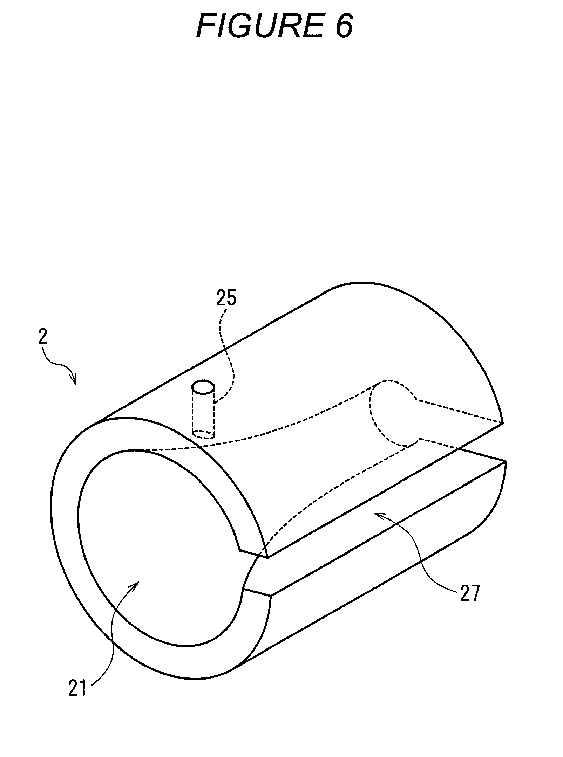

Furthermore, the external shape of the block member 2 need not be a rectangular parallelepiped but may be a cylinder as shown in Figure 6. Moreover, the passage 21 may have a three-dimensional tapered shape such as a substantial cone as shown in Figure 6.

Furthermore, in the above-described embodiment, the resin supply device 3 separately supplies and then mixes the base resin and the curing agent immediately before supplying the mixture to the block member 2. However, the configuration of the resin supply device 3 may be simplified so that the resin resulting from the mixture is supplied to the block member 2 via a pump.

Additionally, in the above-described embodiment, the resin impregnating apparatus 1 is located in the vicinity of the bobbin B. However, the present invention is not limited to this position. For example, where the temperature regulating unit 4 is used to set the block member 2 at a relatively high temperature to reduce the viscosity of the resin in order to easily impregnate the fibers F with the resin, the resin impregnating apparatus 1 may be located in the vicinity of the mandrel M taking into the account a relatively short time required to cure the resin P.

While the present invention has been described with respect to preferred embodiments thereof, it will be apparent to those skilled in the art that the disclosed invention may be modified in numerous ways and may assume many embodiments other than those specifically set out and described above. Accordingly, it is intented by the appended claims to cover all modifications of the present invention that fall within the true spirit and scope of the invention.

## Claims

1. A resin impregnating apparatus impregnating fibers with resin in filament winding formation, the apparatus being **characterized by** comprising:
a block member comprising a tapered passage through which said fibers pass and which is tapered toward a direction in which said fibers pass, and a resin supply device supplying said resin to said fibers in the vicinity of an inlet of said tapered passage, and in that:
as said fibers pass through the tapered passage carrying the resin supplied by said resin supply device, the resin is pressurized by a wedge effect of the tapered passage so that the fibers are impregnated with the resin.

2. A resin impregnating apparatus according to Claim 1, **characterized in that** said block member has an opening in at least a part of a periphery thereof, the opening being in communication with said tapered passage and extending from the inlet to an outlet of said tapered passage.

3. A resin impregnating apparatus according to Claim 2, **characterized in that** said opening is open upward.

4. A resin impregnating apparatus according to Claim 2 or Claim 3, **characterized in that** said block member further comprises a lockable closing member lockably closing said opening so as to be able to freely open and close the opening.
